# EUROPEAN PATENT APPLICATION

(11) **EP 1 876 667 A1**
(43) Date of publication of application: **09.01.2008**
(21) Application number: 06712155.8
(22) Date of filing: 23.01.2006
(51) Int. Cl.: H01M 8/24, H01M 8/02, H01M 8/12

(54) **SOLID OXIDE FUEL CELL**

(30) Priority: 20.04.2005 JP 2005122645
(71) Applicant: DAIKIN INDUSTRIES, LTD., Osaka-shi, Osaka 530-8323 (JP)
(72) Inventor: KAWAZOE, M. Sakai Seisakusho of Daikin Ind. Ltd., Sakai-shi Osaka; 5918022 (JP); YONEMOTO, K. Sakai Seisakusho of Daikin Ind. Ltd., Sakai-shi Osaka; 5918022 (JP)
(74) Representative: Goddar, Heinz J.
(86) International application number: PCT/JP2006/300939
(87) International publication number: WO 2006/114920

(57) **Abstract**

An object of the invention is to simplify the structure and recirculate a fuel gas. A stack 10 composed of disc-type fuel cells 1 and disc-type separators 2 stacked alternately is housed in a casing 11. There are provided a fuel supply part 12 extending through the central part of the upper wall of the casing 11 for supplying fuel to the central part of the stack 10, an air supply part 13 extending through the central part of the lower wall of the casing 11 for supplying air to the central part of the stack 10, a fuel discharge part 14 extending through the central part of the lower wall of the casing 11 for discharging fuel after power generation from the central part of the stack 10, an exhaust discharge part 15 extending through the peripheral part of the lower wall of the casing 11 for discharging an exhaust gas resulting from the combustion of mixture of the fuel after power generation and air, and a recirculation part 16 for mixing the fuel after power generation discharged from the fuel discharge part 14 with newly-supplied fuel.

## Description

### Technical Field

This invention relates to a solid oxide fuel cell having a plurality of cells combined to constitute a cell stack and configured to make remaining fuel after power generation and air come into contact with each other.

### Background Art

It is conventionally known that a plate-type solid oxide fuel cell features a high power density in power generation.

Known as a method for compactly arranging and stacking plate-type cells with less seal portions is stacking disc-type plate cells together with separators without sealing the peripheries of discs, mixing a remaining fuel gas after reaction and an oxidant-containing gas on the outer peripheries of the cells to cause combustion (cf. Patent document 1).

The fuel cell described in Patent document 1 supplies fuel and air through the cell central part, flows the fuel and the air from the cell central part toward the outer periphery to generate power, and mixes a remaining fuel after power generation and the air on the outer peripheral part to cause combustion.

Another method for preventing the remaining fuel after power generation and the air from becoming mixed is also known (Patent document 2).
Patent document 1: Japanese Patent Application Laid-Open No. 6-290798
Patent document 2: Japanese Patent Application Laid-Open No. 11-233129

### Disclosure of Invention

However, the fuel cell described in Patent document 1 mixes the remaining fuel after power generation and air on the outer peripheries of the cells to cause combustion, which is disadvantageous as it is in being incapable of achieving reuse of steam or improving generation efficiency by recirculation of fuel gas, and there is no proposal for a specific structure for recirculating the fuel gas in the plate-type fuel cell with no peripheral sealing.

In contrast, in the case of employing a structure having a seal portion on the outer periphery, the seal structure becomes more complicated for the purpose of stress relaxation as the seal length increases, which arises the problems of degradation in reliability, cost increase, size increase in shape, increase in radiation losses associated with the size increase, and the like. Omitting sealing in consideration of such deficiencies makes it impossible to recirculate the fuel gas.

This invention has been made to solve the aforementioned problems, and has an object to provide a solid oxide fuel cell capable of simplifying the structure and recirculating the fuel gas.

### Means for solving the problems

A solid oxide fuel cell according to claim 1 having a plurality of cells combined to constitute a cell stack and generating power using a fuel and an oxidant, and allowing a remaining fuel after power generation and air to come into contact with each other, comprises: branching means for branching part of the remaining fuel after power generation in each of the cells before contacting air; and a recirculation flow path for recirculating a branched fuel to a fuel supply line.

In this case, reuse of steam and improvement in efficiency can be achieved by recirculation of a fuel gas while maintaining a simply-structured outer-periphery seal-less stack.

In a solid oxide fuel cell according to claim 2, plate-type cells and separators are stacked alternately to constitute a cell stack, and this cell stack has no seal at least on part of its outer periphery, and is configured to: mix a remaining fuel after power generation and an oxidant-containing gas to cause combustion; and to branch part of a remaining fuel gas after power generation in each cell from a downstream part of a fuel gas path that faces the cells in the cell stack to recirculate to a fuel supply line.

In this case, reuse of steam and improvement in efficiency can be achieved by recirculation of a fuel gas while maintaining a simply-structured outer-periphery seal-less stack.

A solid oxide fuel cell according to claim 3 comprises: a path crossing each of the cells for supplying a fuel gas and an oxidant-containing gas in the vicinity of the cell center; a within-separator path for guiding a branched remaining fuel gas after power generation to the vicinity of the cell center; and a path crossing the vicinity of the cell center for supplying a recirculation circuit with the remaining fuel gas having been guided to the vicinity of the cell center.

This case presents a manifold type which crosses the cells, and arranging the manifold part in the vicinity of the cell center provides a more compact structure than in the type which supplies a fuel gas and an oxidant-containing gas by a cell outer-peripheral manifold and discharges the remaining fuel gas after power generation.

A solid oxide fuel cell according to claim 4 comprises: a within-separator path of the remaining fuel gas after power generation formed by rib configuration of the separator; and a branch part provided in the vicinity of the outer periphery of the separator, leading to the within-separator path of the remaining fuel gas after power generation.

This case achieves a structure with one separator, which can simplify the structure.

A solid oxide fuel cell according to claim 5 comprises: a within-separator path of the remaining fuel gas after power generation formed by making the separator have a hollow structure; and a branch part made up of a plurality of communicating holes opened in the vicinity of the outer periphery of the separator, leading to the within-separator path of the remaining fuel gas after power generation.

In this case, disposing many branch communicating holes on the cell peripheral part can distribute the fuel gas uniformly in an anode-side flow path and can reduce the difference in distance between the respective branch holes provided on the peripheral part and the discharge part in the vicinity of the cell center, which can reduce the difference in pressure losses and make the within-surface gas flow rate distribution uniform.

A solid oxide fuel cell according to claim 6 comprises a fuel gas path, a path of the remaining fuel gas after power generation and an air path formed by combining two layers of concentric rib and separator having a recess on the rib saddle.

In this case, the separator is capable of serving also as an interconnector, the number of components can be reduced, which can achieve compactness because of reduction in stack thickness and reduction in heat losses resulting from the compactness.

A solid oxide fuel cell according to claim 7 comprises a fuel gas path, a path of the remaining fuel gas after power generation and an air path formed by combining a collecting plate having concentric ribs and a plurality of holes in the ribs and/or slits crossing the rib saddle with a separator plate.

Since this case eliminates the necessity to provide the collecting plate with the function of separating flow paths, enabling free choice of configuration such as holes or slits, which can achieve relaxation of thermal stress and improvement in collecting function and can also greatly improve the flow rate distribution.

A solid oxide fuel cell according to claim 8 employs a separator configured to have a smaller flow resistance along the circumference than in the radial direction.

In this case, the imbalance in fuel supply to the cells can be compensated for by the flow along the circumference, and the within-surface distribution of the fuel gas as uniform as possible can be obtained.

### Effects of the invention

The invention according to claim 1 brings about the specific effect of achieving reuse of steam and improvement in efficiency by recirculation of fuel gas while maintaining a simply-structured outer-periphery seal-less stack.

The invention according to claim 2 brings about the specific effect of achieving reuse of steam and improvement in efficiency by recirculation of fuel gas while maintaining a simply-structured outer-periphery seal-less stack.

The invention according to claim 3 brings about the specific effect of providing a structure more compact than in the type which supplies a fuel gas and an oxidant-containing gas by cell outer-peripheral manifold and discharges the remaining fuel gas after power generation.

The invention according to claim 4 brings about the specific effect of simplifying the structure.

The invention according to claim 5 brings about the specific effect of enabling to reduce the difference in pressure losses and making the within-surface gas flow rate distribution uniform.

The invention according to claim 6 brings about the specific effect of achieving compactness because of reduction in stack thickness and reduction in heat losses resulting from the compactness.

The invention according to claim 7 brings about the specific effect of enabling free choice of configuration such as holes or slits, which can achieve relaxation of thermal stress and improvement in collecting function and can also greatly improve the flow rate distribution.

The invention according to claim 8 brings about the specific effect of compensating for the imbalance in fuel supply to the cells by the flow along the circumference to obtain the within-surface distribution of the fuel gas as uniform as possible.

### Best Mode for Carrying Out the Invention

Hereinafter, embodiments of a solid oxide fuel cell according to this invention will be described in detail with reference to accompanied drawings.

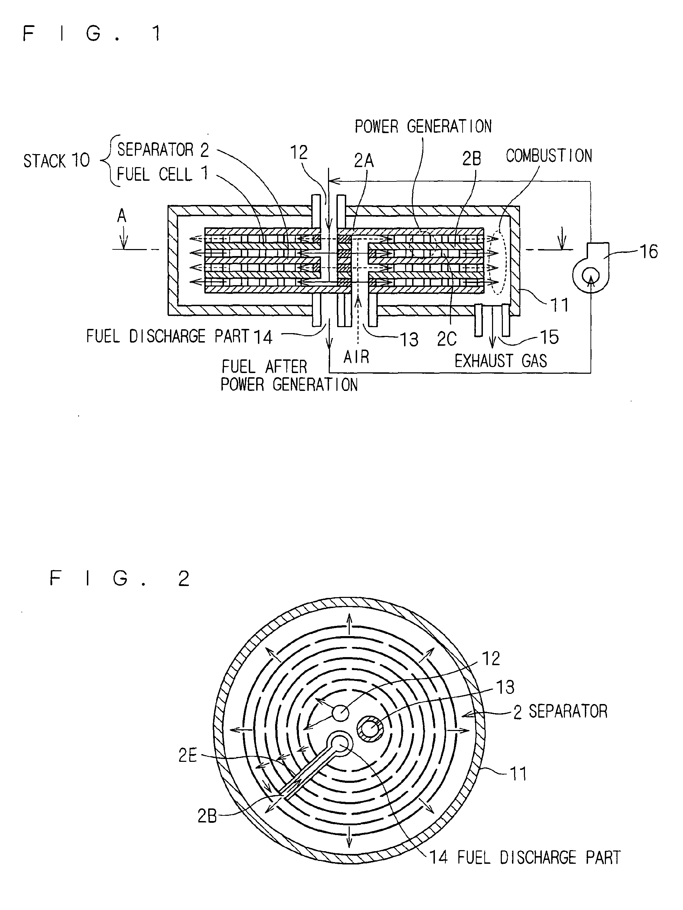

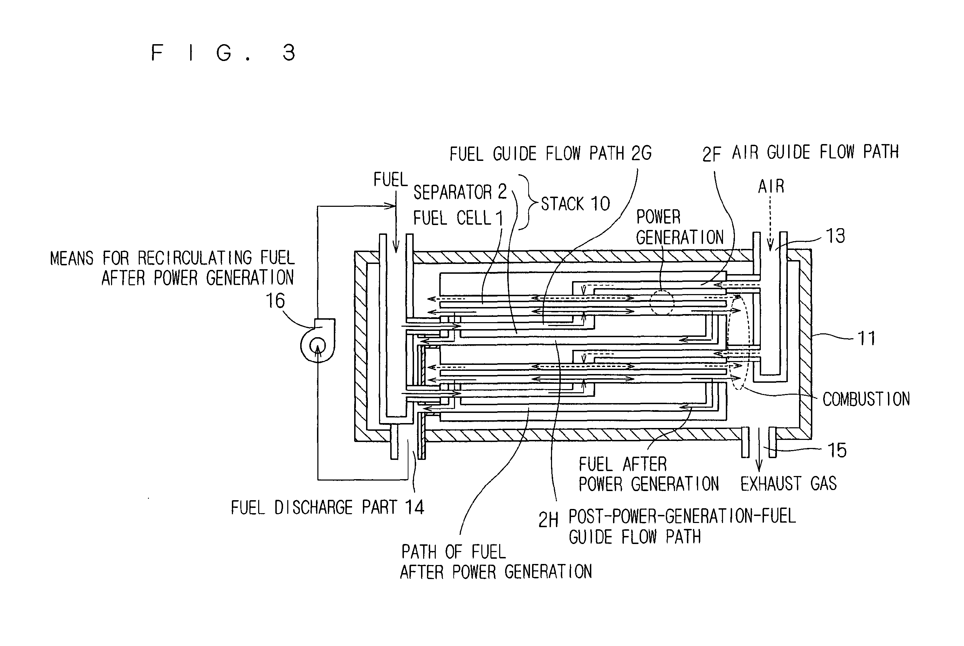

Fig. 1 is a longitudinal sectional view showing a solid oxide fuel cell according to one embodiment of this invention, and Fig. 2 is an A-A arrow-indicated view of Fig. 1.

In this solid oxide fuel cell, a stack 10 composed of disc-type fuel cells 1 and disc-type separators 2 stacked alternately is housed in a casing 11.

There are also provided a fuel supply part 12 extending through the central part of the upper wall of the casing 11 for supplying fuel to the central part of the stack 10, an air supply part 13 extending through the central part of the lower wall of the casing 11 for supplying air to the central part of the stack 10, a fuel discharge part 14 extending through the central part of the lower wall of the casing 11 for discharging fuel after power generation from the central part of the stack 10, and an exhaust discharge part 15 extending through the peripheral part of the lower wall of the casing 11 for discharging an exhaust gas resulting from the combustion of mixture of the fuel after power generation and air.

In addition, a recirculation part 16 for mixing the fuel after power generation discharged from the fuel discharge part 14 with newly-supplied fuel is also provided.

Further, the central part of the separator 2 is a manifold part 2A through which the fuel supply part 12, air supply part 13 and fuel discharge part 14 extend, and a reaction part surrounding this manifold part 2A is provided with a plurality of arcuate guide blades 2B and 2C on its both main surfaces, respectively.

Furthermore, a branch part 2D for branching the fuel after power generation is provided on the peripheral part of the separator 2, and a flow path 2E for transmitting the fuel after power generation from this branch part to the fuel discharge part 14 is provided.

Since the power generating operation of the fuel cell is conventionally known, detailed description will be omitted.

Therefore, in this case, reuse of steam and improvement in efficiency can be achieved by recirculation of fuel gas while maintaining a simply-structured outer-periphery seal-less stack.

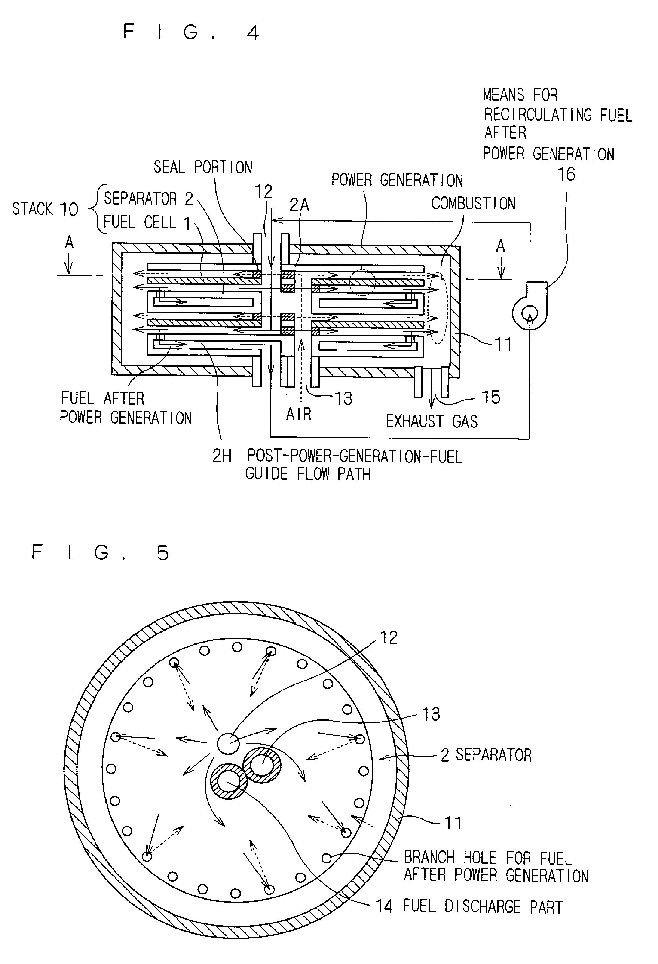

Fig. 3 is a longitudinal sectional view showing a solid oxide fuel cell according to another embodiment of this invention.

In this solid oxide fuel cell, a stack 10 composed of disc-type fuel cells 1 and disc-type separators 2 stacked alternately is housed in a casing 11.

There are also provided a fuel supply part 12 extending through the peripheral part of the upper wall of the casing 11 for supplying fuel to the peripheral part of the stack 10, an air supply part 13 extending through the peripheral part of the upper wall of the casing 11 for supplying air to the peripheral part of the stack 10, a fuel discharge part 14 extending through the peripheral part of the lower wall of the casing 11 for discharging fuel after power generation from the peripheral part of the stack 10, and an exhaust discharge part 15 extending through the peripheral part of the lower wall of the casing 11 for discharging an exhaust gas resulting from the combustion of mixture of the fuel after power generation and air.

In addition, a recirculation part 16 for mixing the fuel after power generation discharged from the fuel discharge part 14 with newly-supplied fuel is also provided.

Further, the aforementioned separator 2 is provided with an air guide flow path 2F for guiding the air supplied from the air supply part 13 to the lower side of the central part of the separator 2, a fuel guide flow path 2G for guiding the fuel supplied from the fuel supply part 12 to the upper side of the central part of the separator 2 and a post-power-generation-fuel guide flow path 2H for guiding part of the fuel after power generation from the upper side of the peripheral part of the separator 2 to the fuel discharge part 14.

Since the power generating operation of the fuel cell is conventionally known, detailed description will be omitted.

Therefore, in this case, reuse of steam and improvement in efficiency can also be achieved by recirculation of fuel gas while maintaining a simply-structured outer-periphery seal-less stack.

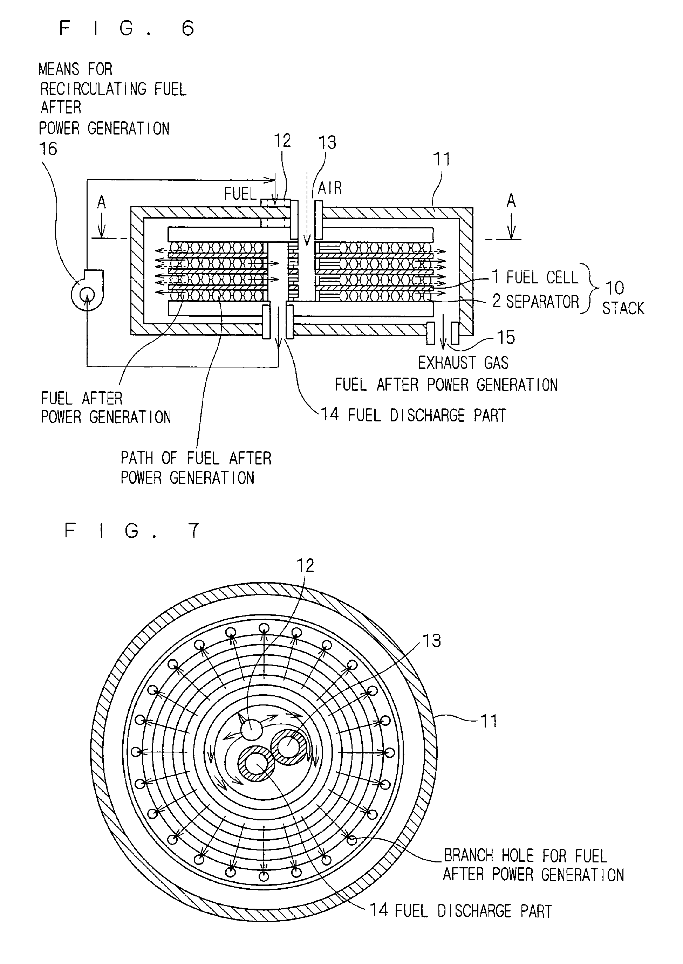

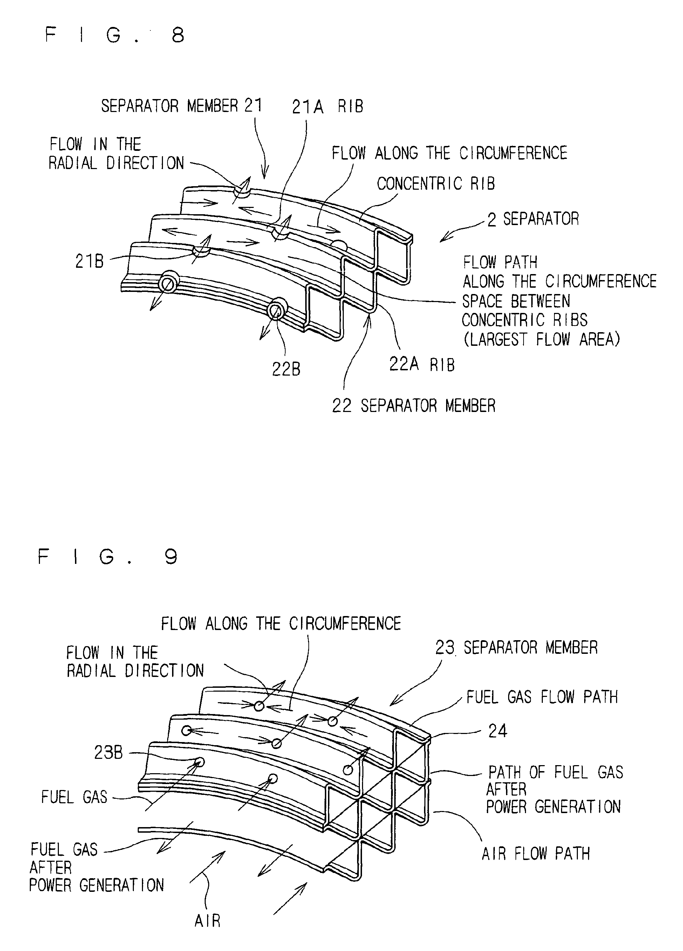

Fig. 4 is a longitudinal sectional view showing a solid oxide fuel cell according to still another embodiment of this invention, and Fig. 5 is an A-A arrow-indicated view of Fig. 4.

In this solid oxide fuel cell, a stack 10 composed of disc-type fuel cells 1 and disc-type separators 2 stacked alternately is housed in a casing 11.

There are also provided a fuel supply part 12 extending through the central part of the upper wall of the casing 11 for supplying fuel to the central part of the stack 10, an air supply part 13 extending through the central part of the lower wall of the casing 11 for supplying air to the central part of the stack 10, a fuel discharge part 14 extending through the central part of the lower wall of the casing 11 for discharging fuel after power generation from the central part of the stack 10, and an exhaust discharge part 15 extending through the peripheral part of the lower wall of the casing 11 for discharging an exhaust gas resulting from the combustion of mixture of the fuel after power generation and air.

In addition, a recirculation part 16 for mixing the fuel after power generation discharged from the fuel discharge part 14 with newly-supplied fuel is also provided.

Further, the central part of the separator 2 is a manifold part 2A through which the fuel supply part 12, air supply part 13 and fuel discharge part 14 extend, and a reaction part is formed to surround this manifold part 2A.

Furthermore, a post-power-generation-fuel guide flow path 2H for guiding part of the fuel after power generation from the upper side of the peripheral part of the separator 2 to the fuel discharge part 14 is provided.

Since the power generating operation of the fuel cell is conventionally known, detailed description will be omitted.

Therefore, in this case, the structure can be simplified.

Fig. 6 is a longitudinal sectional view showing a solid oxide fuel cell according to still another embodiment of this invention, and Fig. 7 is an A-A arrow-indicated view of Fig. 6.

In this solid oxide fuel cell, a stack 10 composed of disc-type fuel cells 1 and disc-type separators 2 stacked alternately is housed in a casing 11.

There are also provided a fuel supply part 12 extending through the central part of the upper wall of the casing 11 for supplying fuel to the central part of the stack 10, an air supply part 13 extending through the central part of the upper wall of the casing 11 for supplying air to the central part of the stack 10, a fuel discharge part 14 extending through the central part of the lower wall of the casing 11 for discharging fuel after power generation from the central part of the stack 10, and an exhaust discharge part 15 extending through the peripheral part of the lower wall of the casing 11 for discharging an exhaust gas resulting from the combustion of mixture of the fuel after power generation and air.

In addition, a recirculation part 16 for mixing the fuel after power generation discharged from the fuel discharge part 14 with newly-supplied fuel is also provided.

Further, the central part of the separator 2 is a manifold part 2A through which the fuel supply part 12, air supply part 13 and fuel discharge part 14 extend, and a reaction part is formed surrounding this manifold part 2A.

Furthermore, a post-power-generation-fuel guide flow path 2H for guiding part of the fuel after power generation from the upper side of the peripheral part of the separator 2 to the fuel discharge part 14 is provided.

Since the power generating operation of the fuel cell is conventionally known, detailed description will be omitted.

Therefore, in this case, the structure can be simplified.

Fig. 8 is a partial perspective view showing an exemplary structure of the separator 2 employed in the solid oxide fuel cell shown in Figs. 6 and 7.

This separator 2 is formed by integrally combining a first separator member 21 having a plurality of concentric ribs 21A curved upwardly and a second separator member 22 having a plurality of concentric ribs 22A curved downwardly, and has recesses 21 B on the rib saddle and recesses 22B at the joint between the both separator members, which thereby form guide flow paths for guiding the newly-supplied fuel, air and fuel after power generation, respectively.

Since the separator is capable of serving also as an interconnector in this case, the number of components is reduced, which can achieve compactness because of reduction in stack thickness and reduction in heat losses resulting from the compactness.

Fig. 9 is a partial perspective view showing another exemplary structure of the separator 2 employed in the solid oxide fuel cell shown in Figs. 6 and 7.

This separator 2 is formed by alternately stacking a separator member (collecting plate) 23 having a plurality of concentric ribs 23A curved upwardly with small diameter holes 23B formed therein and a separator plate 24, to thereby form guide flow paths for guiding the newly-supplied fuel, air and fuel after power generation, respectively.

Since this case eliminates the necessity to provide the collecting plate with the function of separating flow paths, enabling free choice of configuration such as holes or slits, which can achieve relaxation of thermal stress and improvement in collecting function and can also greatly improve the flow rate distribution.

### Brief Description of Drawings

[Fig. 1] is a longitudinal sectional view showing a solid oxide fuel cell according to one embodiment of this invention.
[Fig. 2] is an A-A arrow-indicated view of Fig. 1.
[Fig. 3] is a longitudinal sectional view showing a solid oxide fuel cell according to another embodiment of this invention.
[Fig. 4] is a longitudinal sectional view showing a solid oxide fuel cell according to still another embodiment of this invention.
[Fig. 5] is an A-A arrow-indicated view of Fig. 4.
[Fig. 6] is a longitudinal sectional view showing a solid oxide fuel cell according to still another embodiment of this invention.
[Fig. 7] is an A-A arrow-indicated view of Fig. 6.
[Fig. 8] is a partial perspective view showing an exemplary structure of a separator employed in the solid oxide fuel cell shown in Figs. 6 and 7.
[Fig. 9] is a partial perspective view showing another exemplary structure of a separator employed in the solid oxide fuel cell shown in Figs. 6 and 7.

### Description of Reference Characters

- 1: fuel cell
- 2: separator
- 2F: air guide flow path
- 2G: fuel guide flow path
- 2H: post-power-generation-fuel guide flow path
- 10: stack
- 14: fuel discharge part
- 21, 22: separator members
- 21 A, 22A: ribs
- 23: separator member
- 23A: rib

## Claims

1. A solid oxide fuel cell having a plurality of cells combined to constitute a cell stack and generating power using a fuel and an oxidant, and allowing a remaining fuel after power generation and air to come into contact with each other,
said solid oxide fuel cell **characterized in that** it comprises:
branching means for branching part of the remaining fuel after power generation in each of the cells before contacting air; and
a recirculation flow path for recirculating a branched fuel to a fuel supply line.

2. A solid oxide fuel cell **characterized in that**
plate-type cells and separators are stacked alternately to constitute a cell stack, and
this cell stack has no seal at least on part of its outer periphery, and is configured to: mix a remaining fuel after power generation and an oxidant-containing gas to cause combustion; and to branch part of a remaining fuel gas after power generation in each cell from a downstream part of a fuel gas path that faces the cells in the cell stack to recirculate to a fuel supply line.

3. The solid oxide fuel cell according to claim 1 or 2, comprising:
a path crossing each of the cells for supplying a fuel gas and an oxidant-containing gas in the vicinity of the cell center;
a within-separator path for guiding a branched remaining fuel gas after power generation to the vicinity of the cell center; and
a path crossing the vicinity of the cell center for supplying a recirculation circuit with the remaining fuel gas having been guided to the vicinity of the cell center.

4. The solid oxide fuel cell according to claim 3, comprising:
a within-separator path of the remaining fuel gas after power generation formed by rib configuration of the separator; and
a branch part provided in the vicinity of the outer periphery of the separator, leading to the within-separator path of the remaining fuel gas after power generation.

5. The solid oxide fuel cell according to claim 3, comprising:
a within-separator path of the remaining fuel gas after power generation formed by making the separator have a hollow structure; and
a branch part made up of a plurality of communicating holes opened in the vicinity of the outer periphery of the separator, leading to the within-separator path of the remaining fuel gas after power generation.

6. The solid oxide fuel cell according to claim 5, comprising
a fuel gas path, a path of the remaining fuel gas after power generation and an air path formed by combining two layers of concentric rib and separator having a recess on the rib saddle.

7. The solid oxide fuel cell according to claim 5, comprising
a fuel gas path, a path of the remaining fuel gas after power generation and an air path formed by combining a collecting plate having concentric ribs and a plurality of holes in the ribs and/or slits crossing the rib saddle with a separator plate.

8. The solid oxide fuel cell according to any one of claims 4 to 7, wherein
the separator is configured to have a smaller flow resistance along the circumference than in the radial direction.
